(19) Europäisches Patentamt

European Patent Office

Office européen des brevets

(11) Veröffentlichungsnummer: **0 291 020 B1**

(12) **EUROPÄISCHE PATENTSCHRIFT**

(45) Veröffentlichungstag der Patentschrift: **12.08.92**

(21) Anmeldenummer: **88107518.8**

(22) Anmeldetag: **10.05.88**

(51) Int. Cl.⁵: **H01G 4/30**, H01G 13/00

(54) **Elektrische Kondensatoren mit kleiner Kapazitätstoleranz und Verfahren zu ihrer Herstellung.**

(30) Priorität: **12.05.87 DE 3715810**

(43) Veröffentlichungstag der Anmeldung:
**17.11.88 Patentblatt 88/46**

(45) Bekanntmachung des Hinweises auf die
Patenterteilung:
**12.08.92 Patentblatt 92/33**

(84) Benannte Vertragsstaaten:
**AT CH DE ES FR GB IT LI SE**

(56) Entgegenhaltungen:
**EP-A- 0 144 857        EP-A- 0 201 771**
**DE-A- 1 764 541        FR-A- 2 497 394**
**FR-A- 2 519 429        US-A- 3 731 354**

(73) Patentinhaber: **SIEMENS AKTIENGESELL-
SCHAFT
Wittelsbacherplatz 2
W-8000 München 2(DE)**

(72) Erfinder: **Kessler, Hartmut, Dipl.-Ing.
Kurt-Schumacherstrasse 5b
W-8400 Regensburg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen elektrischen Kondensator aus einem Stapel von mindestens zwei wenigstens einseitig mit regenerierfähig dünnen Metallbelegungen versehenen Dielektrikumslagen aus Kunststoff, wobei alternierend von Lage zu Lage in der Nähe gegenüberliegender Randseiten und in einem Abstand dazu verlaufende metallfreie Isolierstreifen vorhanden sind und die Metallbelegungen von Lage zu Lage gegenpolig durch auf diese Randseiten aufgetragene Metallschichten kontaktiert sind.

Die Erfindung betrifft weiterhin einen elektrischen Kondensator aus einem Wickel von mindestens zwei wenigstens einseitig mit regenerierfähig dünnen Metallbelegungen versehenen Dielektrikumslagen aus Kunststoff oder Papier, wobei alternierend von Lage zu Lage in der Nähe der Stirnseiten und in einem Abstand dazu verlaufende metallfreie Isolierstreifen vorhanden sind und die Metallbelegungen von Lage zu Lage gegenpolig durch auf diese Randseiten aufgetragene Metallschichten kontaktiert sind.

Die Erfindung betrifft ferner ein Verfahren zur Herstellung eines elektrischen Kondensators, bei dem aus wenigstens einseitig metallisierten Bändern aus Kunststoff oder Papier auf einer Wickeltrommel zur Herstellung eines Stapelkondensators oder auf einen Wickeldorn zur Herstellung eines Wickelkondensators aufgewickelt wird.

Die Erfindung betrifft auch ein Verfahren zur Herstellung eines elektrischen Kondensators, bei dem zunächst ein Dielektrikumsband, dessen Breite ein Vielfaches der für den Einzelkondensator benötigten Breite beträgt, als Mutterband mit in Längsrichtung verlaufenden Metallstreifen versehen wird, zwischen denen gleichbreite und mit gleichem Abstand zueinander liegende metallfreie Streifen sich befinden, und bei dem dieses Band in einzelne Bänder derart zerteilt wird, daß sich jede Schneidlinie in geringem Abstand von einem Rand eines metallfreien Streifens befindet.

Schichtkondensatoren der eingangs angegebenen Art sind beispielsweise in der DE-PS 17 64 548, entsprechend US-PS 3 614 561, und Verfahren zu ihrer Herstellung in der DE-PS 17 64 541, entsprechend den US-PS 3 728 765 und 3 670 378, beschrieben.

Eine andere Art von Schichtkondensatoren, auf die sich die vorliegende Erfindung ebenfalls bezieht, ist in der DE-OS 33 42 329, entsprechend der EP-PS 0 144 857 bzw. der US-PS 4 563 724, beschrieben, wo auch dazugehörige Herstellungsverfahren enthalten sind.

Elektrische Wickelkondensatoren der eingangs angegebenen Art und Verfahren zu ihrer Herstellung sind seit vielen Jahren bekannt. Eine besondere Form von Wickelkondensatoren ist darüberhinaus in der EP-OS 0 201 771, entsprechend US-PS 4 639 832, beschrieben.

Für die Herstellung von elektrischen Kondensatoren mit Kunststoffolien als Dielektrikum und darauf befindlichen regenerierfähig dünnen Metallbelegungen ist es hinreichend bekannt, eine breite Ausgangsfolie mit Metallängsstreifen und dazwischen befindlichen, metallfreien Isolierstreifen zu versehen und dann aus dieser Ausgangsfolie einzelne Bänder durch Schneiden zu erzeugen.

Die beiden Schnitte für ein Band können dabei einerseits durch die Mitte der Metallängsstreifen und andererseits durch die Mitte der Isolierstreifen verlaufen. Es ist aber auch bekannt, siehe DE-OS 28 31 736, die Längsschnitte so zu legen, daß die metallfreien Isolierstreifen um einen geringen Betrag vom Rand des Bandes versetzt sind.

Um die Kapazität eines Schichtkondensators zu berechnen, bedient man sich der Formel $C = \epsilon \cdot \epsilon_0 \, n \, A/d$ mit $A = üL$. Hierbei ist $C$ die Kapazität, $\epsilon$ die Dielektrizitätskonstante des verwendeten Dielektrikums, beispielsweise Papier- oder Kunststoffolie $\epsilon_0$ die Dielektrizitätskonstante des Vakuums, $n$ die Anzahl der aufeinanderliegenden Folienlagen des Schichtkondensators mit der Fläche $A$, wobei $A$ die felderfüllte, also die elektrisch wirksame Fläche zwischen den Metallisierungen bzw. Elektroden darstellt und durch das Produkt aus der Länge $1$ und der Überdeckung $ü$ zweier Elektroden gebildet wird, und $d$ die Dicke des Dielektrikums ist.

Aus der Formel ist ersichtlich, daß sich bei vorgegebener Länge $L$ und Überdeckung $ü$ die Kapazität umgekehrt proportional zur Dicke $d$ des Dielektrikums verändert. Diese Dickenschwankungen liegen üblicherweise in der Größenordnung von 5 bis 15 %, so daß beim Wickeln mit konstanter Länge auch mit unterschiedlichen Kapazitätswerten der so hergestellten Kondensatoren in gleicher Größenordnung gerechnet werden muß. In der Regel werden aber Kondensatoren mit engerer Kapazitätsstreuung gewünscht, z. B. Kondensatoren, bei denen die Kapazitätswerte zu 99 % innerhalb eines Toleranzfeldes von höchstens +/- 5 %, möglichst nur bis +/- 3 % zum Nennwert liegen.

Um dies zu erreichen, ist es bisher üblich und damit bekannt, bei Wickelkondensatoren die tatsächliche Foliendicke $d$ aus der aufgelaufenen Windungszahl $za$, der hierfür verwickelten Folienlängen $aL$ und dem Dorndurchmesser $do$, der dem Anfangsdurchmesser des Kondensatorwickels entspricht, zu bestimmen und hieraus die für diese Foliendicke benötigte endgültige Windungszahl $zo$ bzw. Folienlänge $Lo$ zu berechnen oder aus einer Tabelle zu entnehmen.

In gleicher Weise ist es bekannt, bereits während der Herstellung des Wickels die Kapazität des entstehenden Wickels zu messen und beim Erreichen des Sollwertes das Wickeln zu beenden.

Ferner ist es bekannt, bei Schichtkondensatoren, bei denen die Kondensatoren durch Sägen aus ringförmigen Mutterkondensatoren abgetrennt werden, über entsprechende Steuerung der Abschnittslänge den richtigen Kapazitätswert zu erreichen. Ausgangspunkt für die Einstellung der Abschnittslänge ist hierbei entweder die Kapazität eines bereits abgetrennten Kondensators bekannter Abschnittslänge oder die Kapazität des Mutterkondensators (vgl. DE-AS 1 764 542).

Zusammenfassend kann gesagt werden, daß bekannt ist, die gewünschte Kapazität über die Längeneinstellung der Wickelfolien oder des fertigen Kondensators zu erzielen. Ein Problem dabei besteht darin, daß zusätzlich zur Volumenänderung des Kondensators durch die Foliendickenänderungen noch eine gleichgerichtete Volumenänderung durch die Längenregelung hinzukommt, also ein durch zu dicke Folien dicker als üblich ausfallender Kondensator, der zum Ausgleich der verminderten Kapazität auch noch länger als sonst üblich ausfallen muß. Diese unterschiedliche Größe der Kondensatoren kann beim Einbau in Becher zu erheblichen Fertigungsschwierigkeiten führen.

Bei Kondensatoren gemäß den bereits oben erwähnten EP-PS 0 144 857 bzw. US-PS 4 639 832, wo bereits beim Wickeln durch das Einbrennen der unterbrochenen Freiränder mittels Laserstrahl die Länge der Einzelkondensatoren festgelegt wird, ist eine Anwendung der bisher bekannten Verfahren zum Erzeugen eines eng tolerierten Kondensators nicht möglich.

Der vorliegenden Erfindung liegt die Aufgabe zugrunde, Kondensatoren und Verfahren zu ihrer Herstellung anzugeben, bei denen, wie oben angegeben, enge Kapazitätstoleranzen bereits bei der Herstellung resultieren, indem die Länge der Elektrodenflächen der Kondensatoren unabhängig von den Dickenschwankungen des Dielektrikums ist.

Zur Lösung dieser Aufgabe ist ein Stapelkondensator der eingangs angegebenen Art erfindungsgemäß dadurch gekennzeichnet, daß Abweichungen $\Delta$ d von der vorgegebenen Solldicke d der Dielektrikumslagen durch entsprechende Änderungen $\Delta$ ü der Sollüberdeckung ü der Metallbelegungen entsprechend der Formel C $= \epsilon \cdot \epsilon_0 \cdot$ nL (ü + $\Delta$ü)/ (d + $\Delta$ d) kompensiert sind, mit C = Kapazität des Kondensators, $\epsilon$ = Dielektrizitätszahl des verwendeten Dielektrikum-Materials, $\epsilon_0$ = Dielektrizitätskonstante des Vakuums, n = Zahl der übereinander befindlichen Lagen des Schichtkondensators, L = Länge des Schichtkondensators, ü = Sollüberdeckung, $\Delta$ ü = Änderung der Sollüberdeckung, d = Soll-Dielektrikumsdicke und $\Delta$ d = Abweichung der Soll-Dielektrikumsdicke.

Ferner ist ein Wickelkondensator der eingangs angegebenen Art erfindungsgemäß dadurch gekennzeichnet, daß Abweichungen $\Delta$ d von der vorgegebenen Solldicke d der Dielektrikumslagen durch entsprechende Änderungen $\Delta$ ü der Sollüberdeckung ü der Metallbelegungen entsprechend der Formel C $= \epsilon \cdot \epsilon_0 \cdot$ nL (ü + $\Delta$ ü) / (d + $\Delta$ d) kompensiert sind, mit C = Kapazität des Kondensators, $\epsilon$ = Dielektrizitätskonstante des verwendeten Dielektrikum-Materials, $\epsilon_0$ = Dielektrizitätskonstante des Vakuums, n = Zahl der übereinander befindlichen Lagen des Wickelkondensators, L = Umfang des Kondensatorwickels, ü = Sollüberdeckung, $\Delta$ ü = Änderung der Sollüberdeckung, d = Solldielektrikumsdicke und $\Delta$ d = Abweichung der Soll-Dielektrikumsdicke.

Der Vorteil der Erfindung bei diesem Kondensator besteht darin, daß die Kapazitätswerte in einem sehr engen Toleranzbereich von weniger als +/- 5 % liegen und dennoch die äußeren Abmessungen der Kondensatoren - bei gleichen Kapazitätswerten und gleichem Dielektrikumsmaterial - praktisch gleich sind, wodurch zum Beispiel der Einbau in Becher oder Gehäuse insofern vereinfacht wird, als deren Abmessungen praktisch gleiche Kondensatorgrößen zugrunde liegen.

Der Kondensator der Erfindung, insbesondere hergestellt nach einem der nachfolgend angegebenen Verfahren, weist also gegenüber den bisher bekannten Kondensatoren die Eigenschaften auf, daß die Überdeckung der einzelnen Beläge nicht konstant ist, sondern je nach der Schwankung der Foliendicke größere oder kleinere seitliche Verschiebungen aufweist. Außerdem besitzen alle eine bestimmte Kapazität aufweisenden Kondensatoren die gleiche Länge.

Vorteilhaft ist es, wenn zur Erzielung annähernd gleicher Volumina bei als Massenprodukt hergestellten Kondensatoren die Zahl n umgekehrt proportional zu (d + $\Delta$ d) und die Überdeckung (ü + $\Delta$ ü) proportional zu (d + $\Delta$ d)$^2$, d.h. quadratisch zur Dicke gewählt ist, so daß $\Delta$ ü/ü etwa gleich 2 $\Delta$ d/d ist.

Ein vorteilhaftes, eingangs angegebenes Verfahren zur Herstellung dieser elektrischen Stapeloder Wickelkondensatoren ist dadurch gekennzeichnet, daß vor dem Aufwickeln auf den Kondensatorwickel die Dicke mindestens eines von wenigstens zwei einseitig mit Metallbelegungen versehenen Bändern kapazitiv gemessen wird und daß entsprechend einer Abweichung $\Delta$ d der Banddicke d von dem vorgegebenen Sollwert die Überdeckung ü, um einen erforderlichen Änderungsbetrag $\Delta$ ü gesteuert, vergrößert oder verkleinert wird. Die kapazitive Messung der Dicke erfolgt dabei zum Beispiel in der Weise, daß das Band so über eine elektrisch leitende Walze geführt wird, daß die Walze als eine Elektrode und die Metallbelegung des Bandes als andere Elektrode dienen.

Ein weiteres vorteilhaftes Verfahren zur Herstellung dieser elektrischen Stapel- oder Wickelkondensatoren ist dadurch gekennzeichnet, daß mehrere Lagen von Bändern aufeinandergewickelt werden und die Gesamtdicke dieser Lagen mit einer Solldicke verglichen wird und die durch den Dikkenunterschied zu erwartende Abweichung von der Sollkapazität durch eine Änderung der seitlichen Sollüberdeckung ü bei den bis zum Erreichen der Enddicke aufzuwickelnden Lagen ausgeglichen wird, wobei dieser Korrekturvorgang durch Messen von Zwischensolldicken auch mehrfach vorgenommen werden kann.

Eine vorteilhafte Variante zur Herstellung eines elektrischen Kondensators ist dadurch gekennzeichnet, daß die Breite der Metallbelegung von mindestens einem von wenigstens zwei Bändern mittels einer Entmetallisierungsvorrichtung so eingestellt wird, daß die seitliche Überdeckung ü + $\Delta$ ü linear oder quadratisch proportional zur Banddikke d + $\Delta$ d ist.

Eine weitere Variante zur Herstellung eines Kondensators ist dadurch gekennzeichnet, daß zwei aufeinanderliegende Bänder seitlich so versetzt werden, daß die seitliche Überdeckung ü + $\Delta$ ü linear oder quadratisch proportional zur Banddikke d + $\Delta$ d ist.

Ein weiteres, eingangs angegebenes Verfahren zur Herstellung solcher elektrischer Stapel- oder Wickelkondensatoren ist dadurch gekennzeichnet, daß in Abhängigkeit von der Dicke des zu schneidenden Bandes die Schneidlinien seitlich so verlagert werden, daß die Änderung der Breite des aktiven Metallbelages gegenüber die Sollbreite linear oder quadratisch proportional zur Abweichung der Banddicke von der Sollbanddicke ist, und dann aus diesen Einzelbändern in an sich bekannter Weise Kondensatoren gewickelt werden.

Ist es wünschenswert, daß nicht nur die Länge, sondern auch die Dicke der Kondensatoren konstant ist, so muß die Überdeckung der einzelnen Folien nicht proportional zur Foliendicke, sondern proportional zum Quadrat der Foliendicke gesteuert werden. Dann ist der für Korrekturmaßnahmen vorzusehende Flächenbereich auf dem Metallbelag selbstverständlich größer zu bemessen. Darüberhinaus ist sowohl die Anzahl der Wicklungen wie auch der jeweilige Wert der Foliendicke zu überwachen, da eine konstante Dicke nur erreicht werden kann, wenn das Produkt aus Foliendicke und Anzahl der Windungen konstant bleibt. Die Bestimmung der Foliendicke kann dabei natürlich auch mittels der in der DE-OS 34 35 908 beschriebenen Vorrichtung zum berührungslosen Messen der Dicke von Materialbahnen aus polymeren Werkstoffen erfolgen.

Der Vorteil des Verfahrens der Erfindung besteht darin, daß dadurch, daß die Überdeckung ü während des Wickelns proportional zur tatsächlichen Foliendicke d gehalten wird, der fertige Kondensator eine von der Foliendicke d unabhängige, feste Elektrodenlänge L aufweist und somit auch Kondensatoren, die von ihrem Aufbauprinzip her eine über die Elektrodenlänge steuerbare Feineinstellung des Kapazitätswertes nicht gestatten, dennoch nur eine geringe Kapazitätsstreuung von Exemplar zu Exemplar aufweisen.

Ausführungsbeispiele der Erfindung sind in der Zeichnung dargestellt und werden im folgenden näher beschrieben. Es zeigen:

FIG 1 eine Anordnung zur Dickenmessung mehrerer aufgewickelter Folienlagen;

FIG 2 eine Anordnung zur kapazitiven Dickenmessung einer Folie;

FIG 3 das Herstellen des metallfreien Isolierstreifens durch Abbrennen mittels Laserstrahl;

FIG 4 die Anordnung der Belegungen für einen Kondensator mit innerer Reihenschaltung bei durch Abbrennen gesteuerter Überdeckung;

FIG 5 durch seitliche Versetzung gesteuerte Überdeckung;

FIG 6 in Draufsicht eine mittels Laser freigebrannte Folie;

FIG 7 eine Anordnung für den Folienschnitt bei einem breiten Mutterband;

FIG 8 eine andere Anordnung für den Folienschnitt bei einem breiten Mutterband.

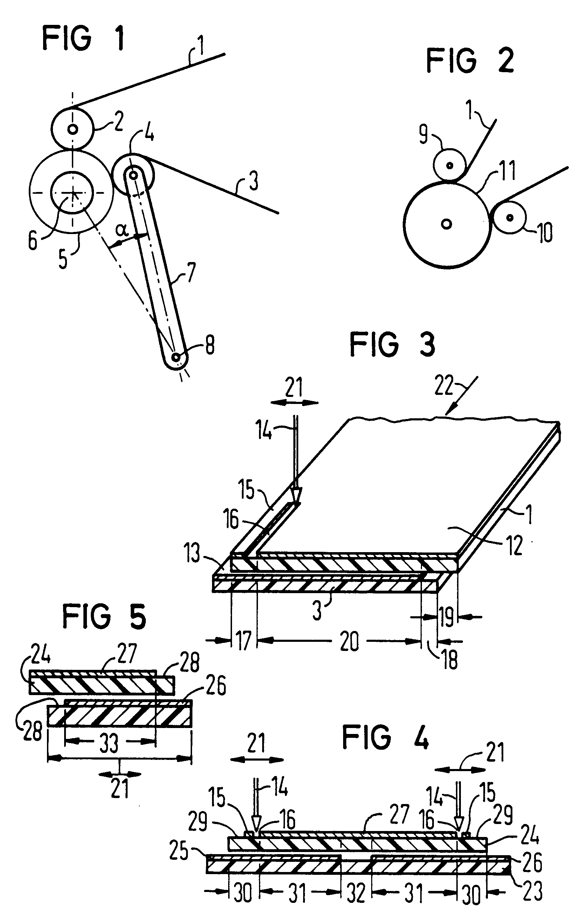

In FIG 1 ist eine Anordnung zum Messen mehrerer aufeinandergewickelter Lagen aus metallisierten Bändern gezeigt. Man erkennt ein Band 1, das um eine Andruckrolle 2 geführt wird, und auf einem Wickeldorn 6 zur Kondensatorwicklung 5 aufgewickelt wird. Ferner sieht man ein Band 3, das, um eine Andruckrolle 4 geführt, ebenfalls auf die Kondensatorwicklung 5 aufgewickelt wird. Die Andruckrolle 4 ist an einer Schwinge 7 befestigt, die um einen Drehpunkt 8 drehbar gelagert ist. Dieser Drehpunkt 8 ist beispielsweise die Achse eines Inkremental-Drehgebers.

Wenn die Bänder 1 und 3 auf dem Wickeldorn 6, der im Falle der Herstellung eines Schichtkondensators durch ein Wickelrad mit großem Durchmesser ersetzt wird, aufgewickelt werden, so wächst die Dicke der Kondensatorwicklung 5 laufend an. Damit vergrößert sich der Winkel zwischen der Schwinge 7 und der Verbindungslinie vom Mittelpunkt des Wickeldornes 6 zum Schwingendrehpunkt 8. Dieser Winkelzuwachs $\Delta\alpha$ läßt sich beispielsweise mittels eines Inkremental-Drehgebers bestimmen.

Dabei ist es zweckmäßig, aufgrund der geringen Dicke einer Einzelfolie nicht kontinuierlich, sondern in mehreren Stufen zu messen. Bei einer bekannten Schwingenlänge $1_s$ ergibt sich dann der radiale Zuwachs der Wicklung $\Delta$ r mit $\Delta$ r = $\Delta$ $\alpha$

$1_s$. Da andererseits $\Delta$ r gleich dem Produkt aus der Banddicke, der Anzahl der seit der letzten Winkelmessung aufgebrachten Windungen und der Anzahl der verwickelten Bänder - im Beispiel zwei Bänder 1, 3 - ist, läßt sich hieraus die effektive Dicke der Bänder bestimmen.

Die aufgrund der Abweichung der effektiven Dicke von der Solldicke zu erwartende Abweichung der effektiven Kapazität von der Sollkapazität wird durch eine Veränderung der Überdeckung der beiden Bänder 1, 3, wie in der Beschreibung noch näher geschildert werden wird, korrigiert.

Eine andere Möglichkeit, die Dicke eines Bandes zu bestimmen, ist in FIG 2 dargestellt. Die elektrisch leitende Walze 11 wird von dem einseitig mit einem Metallbelag versehenen Band 1 umschlungen, wobei die metallbelagsfreie Seite des Bandes 1 auf der Walze 11 zu liegen kommt. Zwischen der Walze 11 und dem Metallbelag des Bandes 1 ergibt sich ein Kondensator, dessen Fläche durch den von dem Band 1 umschlungenen Bereich - dieser Bereich wird hier durch die Umlenkrollen 9, 10 bestimmt - der Walze 11 festgelegt ist und dessen Elektrodenabstand durch die Dicke des Bandes 1 bestimmt wird. Die Abweichung des Kapazitätsmeßwertes gegenüber einem bei einer Sollbanddicke errechneten Kapazitätswert ist umgekehrt proportional zur Abweichung der Banddicke. Die aufgrund der ermittelten Banddickenschwankungen zu erwartenden Kapazitätsänderungen eines Schicht- oder Wickelkondensators werden dann durch eines der nachfolgend beschriebenen Verfahren mit Hilfe einer Änderung der Überdeckung kompensiert.

Ein mögliches Verfahren zur Änderung der Überdeckung bei bekannter Änderung der Banddicke ist in der FIG 3 dargestellt. Zwei Bänder 1, 3, beide einseitig mit einem Metallbeleg 12, 13 versehen, sind aufeinandergelegt, mit einer seitlichen Versetzung 19. Das untere Band 3 besitzt einen Freirand 18, auf dem sich kein Metallbelag 13 befindet. Das obere Band 1 wird in der Bewegungsrichtung 22 unter einer Entmetallisiervorrichtung 14 wie z.B. Laser durchgeführt, so daß ein Isolierrand 17 entsteht. Der restliche Metallbelagreststreifen 15 trägt nicht mehr zur Elektrodenfläche des Bandes 1 bei, da er durch die Freizone 16 vom Metallbelag 12 isoliert ist. Der aktive Teil der Metallbeläge 12 und 13 wird durch die Überdeckung 20 bestimmt. Bei einer zu grossen Banddicke muß die Überdeckung 20 größer gemacht werden, bei einer zu kleinen Banddicke kleiner, die Entmetallisiervorrichtung 14 muß also jeweils nach links oder rechts verschoben werden, wie es die Steuerungsrichtung 21 angibt.

Die Überdeckung 20 wird also durch eine jeweilige Änderung in der Breite des Isolierrandes 17 eingestellt. Der Freirand 18 hingegen ist unveränderlich und kann beispielsweise durch Abdecken während des Aufdampfens des Metallbelages auf die Folie erzeugt werden.

Ein mögliches Verfahren zur Herstellung eines Kondensators mit innerer Reihenschaltung ist in FIG 4 gezeigt. Auf einem Band 23 befinden sich zwei durch einen Freirand 32 getrennte Metallbeläge 25 und 26. Mit diesem Band 23 wird ein weiteres Band 24 verwickelt, dessen Metallbeleg 27 durch wenigstens eine Entmetallisiervorrichtung 14 so in seiner Breite eingestellt wird, daß durch Banddickenschwankungen zu erwartende Kapazitätsänderungen des fertigen Kondensators durch variable Überdeckungen 31 ausgeglichen werden. Der Abstand vom jeweiligen Freirand 29 zur neu entstehenden Freizone 16 ist dabei so groß, daß auch bei einer sehr starken Auslenkung einer oder beider Entmetallisiervorrichtungen 14 nach links oder rechts noch Metallbelagreststreifen 15 erhalten bleiben. Der elektrisch wirksame Freirand ist der Gesamtfreirand 30, der von der Dicke der Bänder 23, 24 abhängt. Hierbei wird hier die Gesamtüberdeckung proportional zur Banddicke $\ddot{u} = (\ddot{u}_1 \times \ddot{u}_2) : (\ddot{u}_1 + \ddot{u}_2)$ gesteuert.

In FIG 5 sind die Freiränder 28 in ihrer Breite festgelegt und die gewünschte niedrige Toleranz des durch die Metallbeläge 26 und 27 gebildeten Kondensators entsteht dadurch, daß die Folien 23 und 24 seitlich so gegeneinander versetzt werden (Steuerungsrichtung 21), daß die Überdeckung 33 bei zu dicken Bändern entsprechend größer und bei zu dünnen Bändern entsprechend kleiner gemacht wird, so daß der entstehende Kondensator ebenfalls eine geringe Toleranz aufweist.

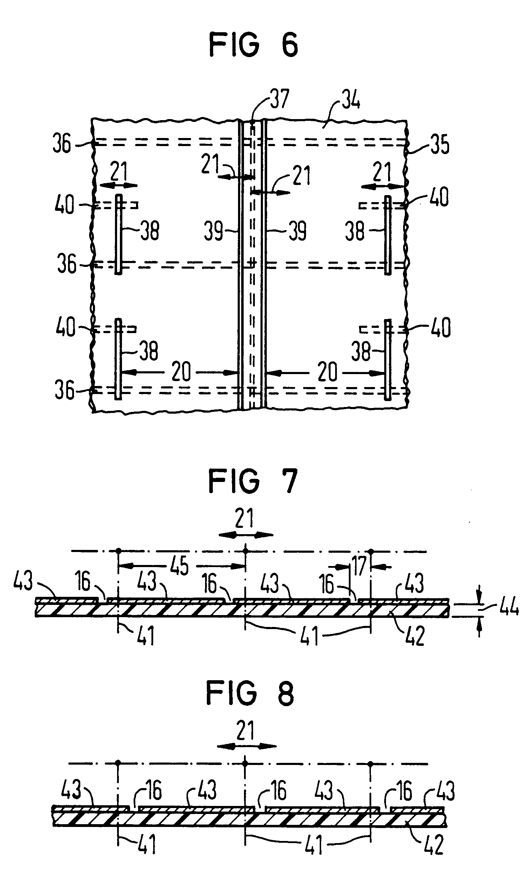

Die in der FIG 6 gezeigte Draufsicht stellt ein vorteilhaftes Verfahren zur Herstellung von induktionsarmen Kondensatoren dar, wie sie beispielsweise in der EP-PS 0 144 857 beschrieben sind. Zwei einseitig mit Metallbelägen versehene Bänder 34 und 35 liegen aufeinander, wobei vom Band 35 nur die am Rande durch den Wellenschnitt nicht abgedeckten Teile zu sehen sind. Durch die Sägelinien 36 ist die Länge des Kondensators festgelegt. Längs der Schnittlinie 37 wird der fertige Wickel geteilt. Die Ausmaße eines einzelnen Kondensators werden also durch die Linien 36 und 37 bestimmt.

Ein induktionsarmer Kondensator ist bekanntermaßen dadurch gekennzeichnet, daß Laserfreizonen 38 erzeugt werden, die alternierend von Dielektrikumslage zu Dielektrikumslage zwischen dem Schlitz 40 und einer der beiden Sägelinien 36 liegen, so daß abwechselnd die Metallbelegungen kontaktiert sind.

Es liegt im Rahmen der Erfindung, daß, je nach der Banddicke, die Laserfreizone 38 nach rechts oder links, wie durch die Steuerungsrichtung 21 angedeutet ist, verschoben wird, damit eine unterschiedliche Überdeckung der aufeinanderliegenden Bänder 34 und 35 erreicht wird. Es ist ebenfalls erfindungsgemäß, die aktive Breite des auf dem Band 34 befindlichen Metallbelages und damit die Überdeckung zwischen den Bändern 34 und 35 durch eine Freizone 39 zu verändern, wobei bei einer Banddicke, die größer als die Sollbanddicke ist, der aktive Metallbelagsbereich, der durch die Überdeckung 20 festgelegt ist, ebenfalls entsprechend vergrößert wird, bzw. bei einem Unterschreiten der Sollbanddicke entsprechend verkleinert wird.

Ein weiteres erfindungsgemäßes Verfahren zur Änderung der Überdeckung entsprechend der Änderung der Foliendicke ist in den FIG 6 und 7 dargestellt. Dieses Verfahren betrifft das Mutterband 42, das später zu Einzelbändern mit der Bandbreite 45 zerschnitten wird, aus welchen wiederum die Kondensatoren gewickelt werden. Das Mutterband 42 weist mehrere, durch Freizonen 16 voneinander getrennte Metallbeläge 43 auf.

Das Erzeugen von Freizonen 16 ist an sich bekannt. Man kann beispielsweise einen durchgehenden Metallbelag mittels mehrerer Schleifscheiben an einzelnen Stellen abtragen, so daß diese Freizonen 16 entstehen. Es ist ebenso möglich, mittels eines Laserstrahles den Metallbelag örtlich zu verdampfen, wodurch wiederum eine Freizone 16 entsteht.

Sind diese Freizonen 16 ohne Berücksichtigung der Banddicke 44 erzeugt worden, so ist es auch erfindungsgemäß, die Banddicke 44 beim Schneiden der breiten Mutterfolie zu berücksichtigen. Die Schneidlinien 41 sind abhängig von der Banddicke 44 seitlich so zu verlagern, daß bei einem Überschreiten der Solldicke die Metallbelagsfläche entsprechend größer bzw. bei einem Unterschreiten entsprechend kleiner ausfällt. Bei einem späteren Aufwickeln der so hergestellten Einzelbänder wird wiederum die Überdeckung, die die aktive Metallbelagsbreite festlegt, entsprechend den Abweichungen der Banddicke von der Sollbanddicke größer oder kleiner als die Sollüberdekkung sein.

Da, wie der FIG 3 zu entnehmen ist, der durch die Entmetallisiervorrichtung 14 entstandene Isolierrand 17 bzw. der beispielsweise durch Abschleifen entstandene Freirand 18 abwechselnd rechts oder links vom aktiven Metallbelag angeordnet sind, muß beim Schneiden die Schnittlinie 41 unmittelbar rechts neben der Freizone 16 liegen, wie in FIG 7 gezeigt, bzw. unmittelbar links von der Freizone 16 liegen, wie in FIG 8 gezeigt.

Die so entstandenen Bänder werden dann, wie an sich bekannt, nach den üblichen Verfahren zu Wickel- oder Schichtkondensatoren gewickelt. Eine an die unterschiedlichen Banddicken angepaßte Änderung der Überdeckung ergibt sich dabei von selbst.

Die Erfindung ist zwar in den Ausführungsbeispielen anhand einseitig metallisierter Dielektrikumsbänder erläutert, jedoch gelten für beidseitig metallisierte Dielektrikumsbänder analoge Überlegungen, die dem Fachmann geläufig sind, wenn er die Erfindung anwendet.

Die Erfindung ist auch anwendbar bei Kondensatoren, die oberhalb der Metallbeläge dünne, durch Lackierung oder insbesondere durch Glimmpolymerisation (vgl. US-PS 3 252 830 und die nicht vorveröffentlichte DE-OS 36 29 837) hergestellte Kunststoffschichten enthalten.

Bezugszeichenliste

| | |
|---|---|
| 1 | Band, bzw. Dielektrikumslage |
| 2 | Andruckrolle |
| 3 | Band, bzw. Dielektrikumslage |
| 4 | Andruckrolle |
| 5 | Kondensatorwicklung |
| 6 | Wickeldorn |
| 7 | Schwinge |
| 8 | Drehpunkt |
| 9 | Umlenkrolle |
| 10 | Umlenkrolle |
| 11 | elektrisch leitende Walze |
| 12 | Metallbelag |
| 13 | Metallbelag |
| 14 | Entmetallisiervorrichtung |
| 15 | Metallbelagreststreifen |
| 16 | Freizone |
| 17 | Isolierrand |
| 18 | Freirand (metallfreier Isolierstreifen) |
| 19 | Versetzung |
| 20 | Überdeckung |
| 21 | Steuerungsrichtung |
| 22 | Bewegungsrichtung |
| 23 | Band |
| 24 | Band |
| 25 | Metallbelag |
| 26 | Metallbelag |
| 27 | Metallbelag |
| 28 | Freirand (metallfreier Isolierstreifen) |
| 29 | Freirand (metallfreier Isolierstreifen) |
| 30 | Gesamtfreirand |
| 31 | Überdeckung |
| 32 | Freirand (metallfreier Isolierstreifen) |
| 33 | Überdeckung |
| 34 | Band mit Metallbelag |
| 35 | Band mit Metallbelag |
| 36 | Sägelinie |
| 37 | Schnittlinie |
| 38 | Laserfreizone |
| 39 | Freizone |
| 40 | Einschnitt |
| 41 | Schnittlinie |
| 42 | Mutterband |

43 Metallstreifen
44 Foliendicke
45 Folienbreite

**Patentansprüche**

1. Elektrischer Kondensator aus einem Stapel von mindestens zwei wenigstens einseitig mit regenerierfähig dünnen Metallbelegungen versehenen Dielektrikumslagen aus Kunststoff, wobei alternierend von Lage zu Lage in der Nähe gegenüberliegender Randseiten und in einem Abstand dazu verlaufende metallfreie Isolierstreifen vorhanden sind und die Metallbelegungen von Lage zu Lage gegenpolig durch auf diese Randseiten aufgetragene Metallschichten kontaktiert sind, **dadurch gekennzeichnet**, daß Abweichungen ($\Delta$ d) von der vorgegebenen Solldicke (d) der Dielektrikumslagen (1) durch entsprechende Änderungen ($\Delta$ ü) der Sollüberdeckung (ü) der Metallbelegungen (12;13) entsprechend der Formel C = $\epsilon \cdot \epsilon_0 \cdot$ nL (ü + $\Delta$ ü)/(d + $\Delta$ d) kompensiert sind mit C = Kapazität des Kondensators, $\epsilon$ = Dielektrizitätskonstante des verwendeten Dielektrikum-Materials, $\epsilon_0$ = Dielektrizitätskonstante des Vakuums, n = Zahl der übereinander befindlichen Lagen (1) des Schichtkondensators, L = Länge des Schichtkondensators, ü = Sollüberdeckung (20;33), $\Delta$ ü = Änderung der Sollüberdeckung (20;33), d = Soll-Dielektrikumsdicke und $\Delta$ d = Abweichung der Soll-Dielektrikumsdicke.

2. Elektrischer Kondensator aus einem Wickel von mindestens zwei wenigstens einseitig mit regenerierfähig dünnen Metallbelegungen versehenen Dielektrikumslagen aus Kunststoff oder Papier, wobei alternierend von Lage zu Lage in der Nähe der Stirnseiten und in einem Abstand dazu verlaufende metallfreie Isolierstreifen vorhanden sind und die Metallbelegungen von Lage zu Lage gegenpolig durch auf diese Randseiten aufgetragene Metallschichten kontaktiert sind, **dadurch gekennzeichnet,** daß Abweichungen ($\Delta$ d) von der vorgegebenen Solldicke (d) der Dielektrikumslagen durch entsprechende Änderungen ($\Delta$ ü) der Sollüberdeckung (ü) der Metallbelegungen entsprechend der Formel C = $\epsilon \cdot \epsilon_0 \cdot$ nL (ü + $\Delta$ ü)/(d + $\Delta$ d) kompensiert sind, mit C = Kapazität des Kondensators, $\epsilon$ = Dielektrizitätskonstante des verwendeten Dielektrikum-Materials, $\epsilon_0$ = Dielektrizitätskonstante des Vakuums, n = Zahl der übereinander befindlichen Lagen des Wickelkondensators, L = Umfang des Kondensatorwickels, ü = seitliche Sollüberdeckung, $\Delta$ ü = Änderung der seitlichen Sollüberdeckung, d = Soll-Dielektrikumsdicke und $\Delta$ d = Abweichung der Soll-Dielektrikumsdicke.

3. Elektrischer Kondensator nach Anspruch 1 oder 2, **dadurch gekennzeichnet,** daß zur Erzielung annähernd gleicher Volumina bei als Massenprodukt hergestellten Kondensatoren die Zahl n umgekehrt proportional zu (d + $\Delta$ d) und die Überdeckung (ü + ü) proportional zu (d + $\Delta$ d)$^2$, d.h. quadratisch zur Dicke gewählt ist, so daß $\Delta$ ü/ü etwa gleich 2 $\Delta$ d/d ist.

4. Verfahren zur Herstellung eines elektrischen Kondensators gemäß Anspruch 1, 2 oder 3, bei dem aus wenigstens einseitig metallisierte Bändern aus Kunststoff oder Papier auf einer Wickeltrommel zur Herstellung eines Stapelkondensators oder auf einen Wickeldorn zur Herstellung eines Wickelkondensators ein Kondensatorwickel aufgewickelt wird, **dadurch gekennzeichnet,** daß vor dem Aufwickeln auf den Kondensatorwickel die Dicke mindestens eines von wenigstens zwei einseitig mit Metallbelegungen versehenen Bändern kapazitiv gemessen wird, und daß entsprechend einer Abweichung ($\Delta$ d) der Banddicke (d) von dem vorgegebenen Sollwert die Überdeckung (ü), um einen erforderlichen Änderungsbetrag ($\Delta$ ü) in Sinne einer, Vergrößerung oder einer Verkleinerung gesteuert wird.

5. Verfahren nach Anspruch 4, **dadurch gekennzeichnet,** daß zur kapazitiven Messung der Dicke das Band so über eine elektrisch leitende Walze geführt wird, daß die Walze als eine Elektrode und die Metallbelegung des Bandes als andere Elektrode dienen.

6. Verfahren zur Herstellung eines elektrischen Kondensators gemäß Anspruch 1, 2 oder 3, **dadurch gekennzeichnet,** daß mehrere Lagen von Bändern aufeinandergewickelt werden und die Gesamtdicke dieser Lagen mit einer Solldicke verglichen wird und die durch den Dickenunterschied zu erwartende Abweichung von der Sollkapazität durch eine Änderung der seitlichen Sollüberdeckung (ü) bei den bis zum Erreichen der Enddicke aufzuwickelnden Lagen ausgeglichen wird, wobei dieser Korrekturvorgang durch Messen von Zwischensolldicken auch mehrfach vorgenommen werden kann.

7. Verfahren zur Herstellung eines elektrischen Kondensators gemäß einem der Ansprüche 4, 5 oder 6, **dadurch gekennzeichnet,** daß die Breite der Metallbelegung von mindestens einem von wenigstens zwei Bändern mittels einer Entmetallisiervorrichtung (14) so eingestellt wird, daß die seitliche Überdeckung (ü + Δ ü) linear oder quadratisch proportional zur Banddicke (d + Δ d) ist.

8. Verfahren zur Herstellung eines elektrischen Kondensators gemäß einem der Ansprüche 3 bis 7, **dadurch gekennzeichnet,** daß zwei aufeinanderliegende Bänder seitlich so versetzt werden, daß die seitliche Überdeckung (ü + Δ ü) linear oder quadratisch proportional zur Banddicke (d + Δ d) ist.

9. Verfahren zur Herstellung eines elektrischen Kondensators nach einem der Ansprüche 1, 2 oder 3, bei dem zunächst ein Dielektrikumsband, dessen Breite ein Vielfaches der für den Einzelkondensator benötigten Breite beträgt, als Mutterband (42) mit in Längsrichtung verlaufenden Metallstreifen (43) versehen wird, zwischen denen gleichbreite und mit gleichem Abstand zueinander liegende metallfreie Streifen (16) sich befinden, und bei denen dieses Band (42) in einzelne Bänder derart zerteilt wird, daß sich jede Schneidlinie (41) in geringem Abstand von einem Rand eines metallfreien Streifens (16) befindet, **dadurch gekennzeichnet,** daß in Abhängigkeit von der Dicke des Bandes die Schneidlinien (41) seitlich so verlagert werden, daß die Breite des aktiven Metallbelages linear oder quadratisch proportional zur Banddicke ist, und dann aus diesen Einzelbändern in an sich bekannter Weise Kondensatoren gewickelt werden.

## Claims

1. Electrical capacitor consisting of a stack of at least two plastic dielectric layers, provided on at least one side with regenerably thin metal coatings, there being continuous metal-free insulating strips alternating from layer to layer in the vicinity of opposite edge sides and at a distance therefrom, and contact being made with the metal coatings, from layer to layer, in opposing polarity, by means of metal layers deposited on said edge sides, characterised in that deviations (Δd) from the predetermined nominal thickness (d) of the dielectric layers (1) are compensated for by corresponding changes (Δü) in the nominal overlap (ü) of the metal coatings (12; 13) in accordance with the formula $C = \epsilon \times \epsilon_0 \times nL\, (ü + Δü)/(d + Δd)$, where C = capacitance of the capacitor, $\epsilon$ = dielectric constant of the dielectric material used, $\epsilon_0$ = dielectric constant of a vacuum, n = number of superimposed layers (1) of the layer capacitor, L = length of the layer capacitor, ü = nominal overlap (20; 33), Δü = change in the nominal overlap (20; 33), d = nominal dielectric thickness and Δd = deviation from the nominal dielectric thickness.

2. Electrical capacitor consisting of a winding of at least two plastic or paper dielectric layers, provided on at least one side with regenerably thin metal coatings, there being continuous metal-free insulating strips alternating from layer to layer in the vicinity of the end sides and at a distance therefrom, and contact being made with the metal coatings, from layer to layer, in opposing polarity, by means of metal layers deposited on said edge sides, characterised in that deviations (Δd) from the predetermined nominal thickness (d) of the dielectric layers are compensated for by corresponding changes (Δü) in the nominal overlap (ü) of the metal coatings in accordance with the formula $C = \epsilon \times \epsilon_0 \times nL\, (ü + Δü)/(d + Δd)$, where C = capacitance of the capacitor, $\epsilon$ = dielectric constant of the dielectric material used, $\epsilon_0$ = dielectric constant of a vacuum, n = number of superimposed layers of the wound capacitor, L = circumference of the capacitor winding, ü = lateral nominal overlap, Δü = change in the lateral nominal overlap, d = nominal dielectric thickness and Δd = deviation from the nominal dielectric thickness.

3. Electrical capacitor according to Claim 1 or 2, characterised in that, in order to achieve approximately constant volumes in the case of capacitors which are manufactured as mass produced items, the number n is inversely proportional to (d + Δd) and the overlap (ü + Δü) is proportional to $(d + Δd)^2$, that is to say it is selected in relation to the square of the thickness so that Δü/ü is approximately equal to 2 Δd/d.

4. Method for manufacturing an electrical capacitor according to Claim 1, 2 or 3, in which a capacitor winding is wound from strips of plastic or paper, metallised on at least one side, on a winding drum in order to manufacture a stack capacitor, or onto a winding mandrel in order to manufacture a wound capacitor, characterised in that, before winding onto the capacitor winding, the thickness of at least one of at least two strips, which are provided on one side with metal coatings, is measured capacitively and in that the overlap (ü) is controlled in the sense of an increase or a decrease by a required change increment (Δü) in accordance with a deviation (Δd) of the strip thickness (d) from the predetermined nominal value.

5. Method according to Claim 4, characterised in that, for capacitive measurement of the thickness, the strip is guided over an electrically conductive roller such that the roller serves as an electrode and the metal coating of the strip serves as the other electrode.

6. Method for manufacturing an electrical capacitor according to Claim 1, 2 or 3, characterised in that a plurality of layers of strips are wound on top of one another and the total thickness of these layers is compared with a nominal thickness and the deviation from the nominal capacitance to be expected as a result of the thickness difference is compensated for by a change in the lateral nominal overlap (ü) in the layers which are to be wound before the final thickness is reached, it also being possible to carry out this correction process a number of times by measuring intermediate nominal thicknesses.

7. Method for manufacturing an electrical capacitor according to one of Claims 4, 5 or 6, characterised in that the width of the metal coating of at least one of at least two strips is set by means of a demetallisation device (14) such that the lateral overlap (ü + Δü) is linearly proportional to the strip thickness (d + Δd) or is proportional to the square of the strip thickness (d + Δd).

8. Method for manufacturing an electrical capacitor according to one of Claims 3 to 7, characterised in that two strips which are on top of one another are offset laterally such that the lateral overlap (ü + Δü) is linearly proportional to the strip thickness (d + Δd) or is proportional to the square of the strip thickness (d + Δd).

9. Method for manufacturing an electrical capacitor according to one of Claims 1, 2 or 3, in which a dielectric strip, whose width is a multiple of the width required for the individual capacitor, is initially provided as a mother strip (42), with metal strips (43) running in the longitudinal direction between which there are located metal-free strips (16), which are of equal width and are at the same distance from one another, and in which said strip (42) is split into individual strips in such a manner that each cutting line (41) is located at a small distance from an edge of a metal-free strip (16), characterised in that the cutting lines (41) are displaced laterally as a function of the thickness of the strip such that the width of the active metal coating is linearly proportional to the strip thickness, or proportional to the square of the strip thickness, and capacitors are then wound from said individual strips in a manner known per se.

**Revendications**

1. Condensateur électrique formé par l'empilage d'au moins deux couches d'un diélectrique en matière plastique, dont au moins une face est recouverte d'armatures métalliques minces régénérables, et dans lequel il est prévu, en alternance d'une couche à la suivante, des bandes isolantes exemptes de métal situées à proximité de côtés marginaux opposés et à distance de ces derniers, et les armatures métalliques sont en contact, avec des polarités opposées d'une couche à l'autre, avec ces armatures métalliques déposées sur ces côtés marginaux, caractérisé par le fait que les écarts (Δd) par rapport à l'épaisseur de consigne prédéterminée (d) des couches de diélectrique (1) sont compensés par des variations correspondantes (Δü) du chevauchement de consigne (ü) des armatures métalliques (12;13) conformément à la formule C = $\epsilon.\epsilon_0$.NL (ü + Δü)/(d + Δd) avec C = capacité du condensateur, $\epsilon$ = constante diélectrique du matériau diélectrique utilisé, $\epsilon_0$ = constante diélectrique du vide, n = nombre des couches superposées (1) du condensateur à couches empilées, L = longueur du condensateur à couches empilées, ü = chevauchement de consigne (20; 33), Δü = variation du chevauchement de consigne (20; 33), d = épaisseur de consigne du diélectrique et Δd = écart de l'épaisseur de consigne du diélectrique.

2. Condensateur électrique formé par un enroulement d'au moins deux couches d'un diélectrique en matière plastique ou en papier, dont au moins une face est recouverte d'armatures métalliques minces régénérables, et dans lequel il est prévu, en alternance d'une couche à la suivante, des bandes isolantes exemptes de métal situées à proximité des faces frontales et à distance de ces dernières, et les armatures métalliques sont en contact, avec des polarités opposées d'une couche à l'autre, avec ces couches métalliques déposées sur ces faces marginales, caractérisé par le fait que les écarts (Δd) par rapport à l'épaisseur de consigne prédéterminée (d) des couches de diélectrique sont compensés par des variations correspondantes (Δü) du chevauchement de consigne (ü) des armatures métalliques conformément à la formule C = $\epsilon . \epsilon_0$ .NL (ü + Δü)/(d + Δd) avec C = capacité du condensateur, $\epsilon$ = constante diélectrique du matériau diélectrique utilisé, $\epsilon_0$ = constante diélectrique du vide, n = nombre des couches superposées du condensateur enroulé, L = circonférence du condensateur enroulé, ü = chevauchement latéral de consigne, Δü = variation du chevauchement latéral de consigne, d = épaisseur de consigne du diélectrique et Δd = écart de l'épaisseur de consigne du diélectrique.

3. Condensateur électrique suivant la revendication 1 ou 2, caractérisé par le fait que pour l'obtention de volumes approximativement identiques dans des condensateurs fabriqués sous la forme d'un produit en grande série, le nombre n est inversement proportionnel à (d + Δd) et le chevauchement (ü + Δü) est proportionnel à (d + Δd)², c'est-à-dire qu'il est choisi proportionnel au carré de l'épaisseur, de sorte que Δü/ü est approximativement égal à 2Δd/d.

4. Procédé pour fabriquer un condensateur diélectrique selon la revendication 1, 2 ou 3, dans lequel on forme un condensateur enroulé au moyen de l'enroulement de bandes en matière plastique ou en papier, dont au moins une surface est métallisée, sur un tambour d'enroulement pour fabriquer un condensateur empilé ou sur un mandrin d'enroulement pour fabriquer un condensateur enroulé, caractérisé par le fait qu'avant l'enroulement pour former le rouleau du condensateur, on mesure capacitivement l'épaisseur d'au moins l'une d'au moins deux bandes, dont une face porte des armatures métalliques, et qu'en fonction d'un écart (Δd) de l'épaisseur (d) de la bande par rapport à la valeur de consigne prédéterminée, on commande le chevauchement (ü) dans le sens d'un accroissement ou d'une réduction d'une valeur de modification nécessaire (Δü).

5. Procédé suivant la revendication 4, caractérisé par le fait que pour la mesure capacitive de l'épaisseur, on guide la bande sur un rouleau électriquement conducteur de telle sorte que le rouleau sert d'électrode et l'armature métallique de la bande forme l'autre électrode.

6. Procédé pour fabriquer un condensateur électrique suivant la revendication 1, 2 ou 3, caractérisé par le fait qu'on enroule les unes sur les autres plusieurs couches de bandes et que l'on compare l'épaisseur totale de ces couches à une épaisseur de consigne et que l'on compare l'écart, auquel on peut s'attendre en raison de la différence d'épaisseur, de la capacité de consigne au moyen d'une modification du chevauchement latéral de consigne (ü) dans les couches devant être enroulées jusqu'à l'obtention de l'épaisseur finale, cette opération de correction pouvant être également réalisée de multiples façons par mesure d'épaisseurs de consigne intercalaires.

7. Procédé pour fabriquer un condensateur électrique selon l'une des revendications 4, 5 ou 6, caractérisé par le fait que la largeur d'au moins l'une d'au moins deux bandes est réglée au moyen d'un dispositif de démétallisation (14) de sorte que le chevauchement latéral (ü + Δü) est proportionnel linéairement ou de façon quadratique à l'épaisseur (d + Δd) de la bande.

8. Procédé pour fabriquer un condensateur électrique suivant l'une des revendications 3 à 7, caractérisé par le fait qu'on décale latéralement deux bandes superposées de sorte que le chevauchement latéral (ü + Δü) est proportionnel d'une manière linéaire ou quadratique à l'épaisseur (d + Δd) de la bande.

9. Procédé pour fabriquer un condensateur électrique suivant l'une des revendications 1, 2 ou 3, selon lequel on équipe tout d'abord une bande de diélectrique, dont la largeur est égale à un multiple de la largeur nécessaire pour le condensateur individuel, en tant que bande mère (42) avec des bandes métalliques (43) qui s'étendent dans la direction longitudinale et entre lesquelles sont situées des bandes (16) exemptes de métal, qui possèdent une même largeur et sont situées à une même distance les unes des autres, et dans lesquelles cette bande (42) est subdivisée en bandes individuelles de sorte que chaque ligne de coupe (41) est située à une faible distance d'un bord de la bande exempte de métal (16), caractérisé par le fait qu'en fonction de l'épaisseur de la bande, les lignes de coupe (41) sont décalées latéralement de telle sorte que la largeur de l'armature métallique active est proportionnelle d'une manière linéaire ou quadratique à l'épaisseur de la bande, et qu'on forme ensuite, d'une manière connue en soi, des condensateurs par enroulement de ces bandes individuelles.

FIG 1

FIG 2

FIG 3

FIG 5

FIG 4

EP 0 291 020 B1

## FIG 6

## FIG 7

## FIG 8

12